Europäisches Patentamt

European Patent Office

Office européen des brevets

(11) Publication number: **0 456 886 A1**

## EUROPEAN PATENT APPLICATION

(21) Application number: **90121113.6**

(22) Date of filing: **05.11.90**

(51) Int. Cl.⁵: **G01C 9/12**

(30) Priority: **09.05.90 ES 9001452**

(43) Date of publication of application:
**21.11.91 Bulletin 91/47**

(84) Designated Contracting States:
**BE DE FR GB GR IT LU NL**

(71) Applicant: **ANGUL, S.L.**
**CN-II, Km. 29 Poligono Industrial Jumapi,**
**C/A, nave 28**
**E-28802 Alcala de Henares(ES)**

(72) Inventor: **Die Erfindernennung liegt noch**
**nicht vor**

(74) Representative: **Klöpsch, Gerald, Dr.-Ing. et al**
**Patentanwälte Dr.-Ing. Klöpsch, Dr.**
**Rolf-Dieter Flaccus, An Gross St. Martin 6**
**W-5000 Köln 1(DE)**

(54) **Angle measuring apparatus.**

(57) The invention refers to an angle measuring apparatus which is characterized by the following features: Its external body or framework is preferably prismatically shaped with on a thin plate and lateral periphery which juts out with a greater width; two of the ends of the latter are lowered by a certain angle with respect to its base surface; in the interior of the same framework there is a cavity preferably of a cylindrical shape which is sealed from the exterior by means of a cover; in the interior of this cavity there is an element which indicates the measurement consisting of a biconvex lens and a counterweight; an axle passes through the said indication element, articulting the same and enabling it to turn around a graduated scale which is also situated at the back of the same cavity which the indicating element is situated.

FIG. 1

EP 0 456 886 A1

The application refers to an angle measuring instrument which offers a series of very considerable advantages over the resources presently used for this purpose.

Presently, and with reference to the state of technology, it should be said that the resources used for measuring angles of inclination are based on the use of elements provided with graduated references for direct comparison or indirect comparing elements or angle transporters. These all leave much to be desired with regard to precision of results obtained. This inconvenience is lessened when more complex and costly instruments are used, but these two characteristics limit their possibility of application.

However, the instrument which is the object of this invention measures angles of inclination in a direct andprecise manner because the measurment is taken from the deviation between the actual surface of the object to be measured and the imaginary axle resulting from the gravitational action.

The measuring system employed in this apparatus is achieved by resting the same on the plane to be measured. The direct measurment of the said angle is visually enlarged.

This angle measuring instrument bases its operation on the action produced ba gravitational forces. It consists of a simple mechanical assembly which avoids the use of complex mechanisms, a electric and electronic components. This reduces the probability of breakdowns of the said apparatus.

The said apparatus operates by means of a framework or main prismatic body, bevelling two of its deviated ends with a set angle to the base surface. The body or framework is set on a thin plate from which the sides jut out from both sides which forms the periphery. In the central zone of the framework there is cavity preferibly of a cylindrical shape. In the interior of the cavity there is an appropriately graduated scale with divisions which show half degress (30 astronomical minutes). This should not imply any limitation whatsoever. In the aformentioned cavity in the framework and on the scale displayed in the sam, a mobile reading element will be sited. This element will be sited on an arm and one end of the elment will be equipped with a biconvenx lens which visually magnifies the affectes value on the graduated scale. A line has been drawn on both sides of the lens to show the value of the angle measured. At the same time it will define the correct position for visualization and reading. At the opposite end of the measuring element there is a prismatic counterweight which houses a metal element. The said visualization element is articulated by an axle which crosses the central zone and is supported by individual orifices in the framework of the apparatus and in the cover which closes the mechanism situated in the aforementioned cylindrcal cavity.

The cavity in the framework is closed by means of a cylindrical shaped cover in order to achieve an appropiate seal.

In order to give a more detailed description of the invention, reference will now be made to the enclosed diagram which shows an example of a preferible form of construction of the invention, without any limitative character whatsoever.

In said diagram 1, the invention of the angle measuring apparatus is seen. It is formed by means of a body or framework -1- with a prismatic shape. Both ends of the same are decreased by a certain angle with respect to the supporting side -10-.

In the interior of this body -1- there is a cylindrical cavity -2- which is sealed from the exterior by a cover which has the same shape -9-. In the interior of the said cavity -2-, there is the element which indicates the measurement -4-. It has a line -5- marked on both sides of the lens. At the far end from themeasuring element there is a counterweight or balancing element -8-; the mechanism is articulated about an axle -7- which passes through the central zone and is supported at each end in the framework -1- and the cover -9-. The mechanism balances freely on the graduated scale -6- which is supported at the back of the cavity -2- by the articulation element -7-, thereby indicating deviations in angles at all times.

In order to understand the working of the apparatus, it should be mentioned that the base -10- will be placed on the surface to be measured. The counterweight -8-(which forms part of the measuring indicator -3-) will always be in a lower position and therefore the lens -4-will be at the opposite end to the counterweight, in the upper part. This will show the deviation in the angle of the said surface ba direct vision and will be magnified on the graduated scale -5-.

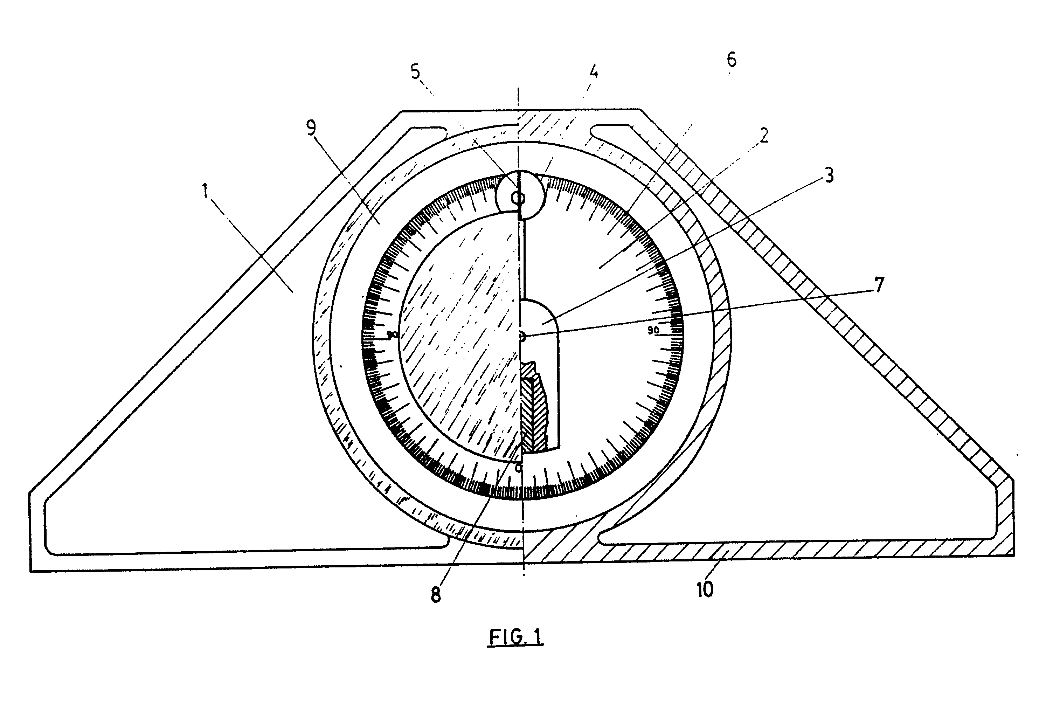

## Claims

1.   Angle measuring apparatus characterized by the following features :
     -   its external body or framework is preferably prismatically shaped with on a thin plate and lateral periphery which juts out with a greater width,
     -   two of the ends of the latter are lowered by a certain angle with respect to its base surface,
     -   in the interior of the same framework there is a cavity preferibly of a cylindrical shape which is sealed from the exterior by means of a cover,
     -   in the interior of this cavity there is an element which indicates the measurement consisting of a biconvex lens and a counterweight,

- an axle passes through the said indication element, articulting the same and enabling it to turn around a graduated scale which is also situated at the back of the same cavity which the indicating element is situated.

2. Angle measuring apparatus which, according to claim 1, is characterized by a fixed graduated scale in the interior of the cylindrical cavity which in the preferible format is conveniently graded to allow for the deviation of angle to be read in half degrees.

3. Angle measuring apparatus which, according to claim 1, is characterized by a mobile angle indicator which balances on an axle which passes through the central part, said measuring element consisting of a biconvex lens at one end which is the reading element and whereby at the other end there is a counterweight with a metal plate, whereby said counterweight is usually situated in a lower position which means that the lens at the opposite end is situated in a higher position of equilibrium.

4. Angle measuring apparatus which, according to claim 1 and 3, is characterized by a reading element which consists of a biconvex lens which has a line drawn on both sides which act as a pointer indicator of the reading whereby thetwo elements ensure that there is correct visualization and reading.

5. Angle measuring apparatus which, according to claim 1 and 3, is characterized by the lines marked as pointers in the lens which always aligned with the imaginary vertical axle which passes through the centre of the earth.

6. Angle measuring apparatus which, according to claim 1, is characterized by simply resting the base of the apparatus onthe surface to be measured, the reading lens directly showing the measurement with magnification.

FIG 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 090 306  (DARDEN) <br> * Abstract; figures 2-9; claim 1 * <br> − − − | 1-6 | G 01 C 9/12 |
| Y | US-A-2 353 911  (LEVEILLE) <br> * Whole document * <br> − − − | 1-6 | |
| A | CH-A-2 608 94  (DENNLER) <br> * Figures 1,2; subclaims 4,6 * <br> − − − | 1 | |
| A | DE-C-1 220 31  (SCHAFFNER) <br> * Whole document * <br> − − − | 1 | |
| A | EP-A-0 161 209  (WILLA) <br> * Abstract; figures 1,6 * <br> − − − − − | 1 | |

| | | | TECHNICAL FIELDS SEARCHED (Int. Cl.5) |
|---|---|---|---|
| | | | G 01 C |

The present search report has been drawn up for all claims

| Place of search | Date of completion of search | Examiner |
|---|---|---|
| The Hague | 12 September 91 | KOLBE W.H. |